(19) Europäisches Patentamt / European Patent Office / Office européen des brevets

(11) **EP 4 249 297 A1**

(12) **EUROPEAN PATENT APPLICATION**

(43) Date of publication:
**27.09.2023 Bulletin 2023/39**

(21) Application number: **22164568.2**

(22) Date of filing: **25.03.2022**

(51) International Patent Classification (IPC):
**B60G 17/0195** (2006.01)    **B60W 40/00** (2006.01)

(52) Cooperative Patent Classification (CPC):
**B60G 17/0195; B60W 40/00;** B60G 2300/02;
B60G 2300/042; B60G 2400/63; B60G 2400/64

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **VOLVO TRUCK CORPORATION**
**405 08 Göteborg (SE)**

(72) Inventor: **SUBRAMANIAN, Chidambaram**
**27407 NC, Greensboro (US)**

(74) Representative: **Germain Maureau**
**12, rue Boileau**
**69006 Lyon (FR)**

(54) **METHOD FOR CONTROLLING VEHICLE PERFORMANCE BY ESTIMATING THE CENTER OF GRAVITY OF A LOADED VEHICLE**

(57)     The present disclosure relates to a method for controlling performance of a vehicle (1, 3), the method comprising: collecting wheel loads (Fzi) applied to wheels tires (Wi) of the vehicle, from wheel sensor sets (VSi, TSi) installed in the wheels, when the vehicle is in a steady state and when it is subjected to a movement (ACx); computing, by a vehicle control unit (VCU), longitudinal and lateral positions (GCx, GCy) of a center of gravity (GC) of the vehicle, based on vehicle parameters (VPM) and the wheel loads when the vehicle in the steady state; measuring the movement; and computing, by the vehicle control unit, a height (GCz) of the center of gravity, based on the movement, the vehicle parameters, the longitudinal or lateral position of the center of gravity and the wheel loads when the vehicle is subjected to the movement.

Fig. 1

**Description**

**TECHNICAL FIELD**

The present disclosure relates to the field of vehicle monitoring systems. More particularly, the present disclosure relates to a method for controlling vehicle performance by estimating the center of gravity of a loaded vehicle. The vehicle may be an automobile or a truck. In addition, the vehicle may tow a trailer. The estimation of the location of the center of gravity may also be applied to a loaded trailer.

**BACKGROUND**

At present, for improving security on roads, the vehicles integrate more and more control systems such as an electronic braking system, an electronic stability control, a vehicle motion management, an active suspension. In fact, these control systems are developed for an ideal load case. However, a same vehicle can be more or less loaded. The load may comprise different density materials and may be placed in different locations in the vehicle. In transport trucks, the density, location and amount of transported loads can change at a very large magnitude, leading to drastic changes in the performance of these control systems. Further, the presence of multiple axles raises additional challenges in designing the behaviors of these systems.

Thus, there is a need for improving the performance of vehicle controls such as braking control, stability control, vehicle motion management and active suspension.

It appears that the performance of such controls depends on the knowledge of the location of the center of gravity of the vehicle. It further appears that the wear of the tires and the fuel consumption can be reduced by improving the performance of these controls.

Existing systems equipping some vehicles integrate an estimation of the location of the center of gravity. However, the accuracy of this estimation appears to be insufficient especially when the position and density of the load change drastically.

So-called "smart tires" integrate sensors that provide real time measurements on the wheel and the interaction between the tire and the road. The measurements can comprise tire load, friction, lateral and longitudinal slip, wheel alignment, steering geometry, hydroplaning condition, and tire wear and health information. A computing unit placed inside the tire estimates the load supported by the wheel from the measurements provided by the sensors inside the tire.

Thus, there is a need for accurately estimating in real time the location of the center of gravity of a vehicle, in view to improve the performance of active suspension, braking control, stability control, vehicle motion management, etc. There is also a need to reduce the wear of tires and fuel consumption of the vehicles.

**SUMMARY**

The present disclosure is related to method for controlling of a vehicle, the method comprising: collecting wheel loads measures applied to wheels tires of the vehicle, from wheel sensor sets installed in the wheels of the vehicle, when the vehicle is in a steady state and when the vehicle is subjected to a movement; computing, by a vehicle control unit, longitudinal and lateral positions of a center of gravity of the vehicle, based on vehicle parameters and the wheel loads measures when the vehicle in the steady state; collecting movement measures of the movement from the wheel sensor sets; computing, by the vehicle control unit, a height of the center of gravity of the vehicle, based on the movement measures, the vehicle parameters, the longitudinal and/or lateral positions of the center of gravity and the wheel load measures when the vehicle is subjected to the movement; and using the lateral positions and height of the center of gravity of the vehicle to adjust control of vehicle brakes and/or vehicle engine torque and/or vehicle stability and/or vehicle suspension.

Thanks to the collection of forces exerted on the wheels, the position and more particularly the height of the center of gravity of the vehicle can be determined more accurately than in the methods of prior related art. As a matter of fact, the measures acquired in the wheels take into account the kinematics of the whole vehicle, including the wheels, the chassis and the suspensions.

According to an embodiment, computations of the position of the center of gravity of the vehicle are performed using equations established considering an equilibrium of moments about a front or rear axle of the vehicle and about an axis along right or left wheels of the vehicle.

According to an embodiment, the movement is one of the following: a longitudinal acceleration, a lateral acceleration, and a combination of a longitudinal and lateral acceleration.

Thus, the method allows to estimate the height of the center of gravity of the tractor as the acceleration measured during the vehicle movement is proportional to the load transfer during this movement.

According to an embodiment, the vehicle is a four-wheel vehicle, and the longitudinal position of the center of gravity of the vehicle is computed from a sum of the wheel load measures on front or rear wheels, multiplied by a distance between the front and rear axles of the vehicle and divided by a sum of the wheel load measures on all the wheels of the vehicle, or the lateral position of the center of gravity of the vehicle is computed from a sum of the wheel load measures on left or right wheels, multiplied by a distance between right and left wheels on a same axle of the vehicle, and divided by a sum of the wheel load measures on all the wheels of the vehicle.

According to an embodiment, the vehicle is a four-wheel vehicle, and the movement is a longitudinal acceleration, the height of the center of gravity of the vehicle being computed from a difference between a sum of the wheel load measures on front or rear wheels, multiplied by a distance between the front and rear axles of the vehicle, and a weight of the vehicle multiplied by the lateral position of the center of gravity of the vehicle, the difference being divided by a mass of the vehicle multiplied by the longitudinal acceleration.

According to an embodiment, the vehicle is an articulated vehicle comprising a trailer linked to a tractor by means of a hitch, the method further comprising: collecting wheel loads measures applied to wheel tires of the trailer, by means of wheel sensors installed in the wheels of the trailer, when the vehicle is in a steady state and when the vehicle is subjected to a movement; computing, by a control unit, longitudinal and lateral positions of a center of gravity of the trailer, based on trailer parameters and the wheel loads measures when the vehicle in the steady state; collecting movement measures of the movement; and computing, by the control unit, a height of the center of gravity of the trailer, based on the movement measures, the trailer parameters, longitudinal positions of the center of gravity of the trailer and the wheel loads measures of the trailer when the vehicle is subjected to the movement.

Thus, the computations required to estimate the position of the center of gravity of the vehicle are simple and do not need powerful computation means.

According to an embodiment, the method further comprises: collecting hitch forces applied to the hitch, by means of a hitch sensor set coupled to the hitch; and estimating a position of the center of gravity of the articulated vehicle, from respective positions of the centers of gravity of the tractor and the trailer, taking into account the hitch forces.

According to an embodiment, the method further comprises: collecting, by each wheel sensor set installed in the wheels of the vehicle, wheel parameters of the wheel tire with which the wheel sensor set is associated; and estimating by each wheel sensor set, the longitudinal, lateral and vertical forces exerted on the wheel tire from the wheel parameters collected on the wheel tire, based on load transfers during movements of the vehicle. Thus, the method can be easily transposed to an articulated vehicle.

According to an embodiment, estimating the longitudinal, lateral and vertical forces by one of the wheel sensor sets is performed by a neural network from the wheel parameters, the method further comprising training the neural network using training data generated with different loads, velocities, tire pressures, and road surface conditions.

According to an embodiment, the wheel parameters comprise at least one of: acceleration parameters measured by an acceleration sensor fixed at an inner face of the wheel tire, a strain parameter measured by a strain sensor at the inner face of the wheel tire, a tire pressure measured by a pressure sensor, vehicle velocity, and road surface parameters and road inclination angle provided by road sensors.

According to an embodiment, the method further comprises: refining the longitudinal, lateral and vertical forces provided by the wheel sensor sets, using road surface parameters and road inclination angle.

According to an embodiment, the method further comprises: comparing the position of the center or gravity of the vehicle to a three-dimension vehicle model; and transmitting a warning message if the position of the center or gravity is not within the three-dimension vehicle model.

Thus, the method allows to identify abnormal results and to estimate reasons for such abnormal results.

Embodiments may also relate to a system for computing a position of a center of gravity of a vehicle, the system comprising a computing unit connected to wheel sensor sets installed in wheels of the vehicle, the computing unit being configured to implement the above-defined method.

Embodiments may also relate to a vehicle comprising a computing unit connected to wheel sensor sets installed in wheels of the vehicle, the computing unit being configured to implement the above-defined method.

According to an embodiment, 15. the vehicle comprises a tractor and a trailer coupled to the tractor by a hitch, the computing unit being configured to compute positions of centers of gravity of the tractor and the trailer, and to estimate the position of the center of gravity of vehicle from the positions of the centers of gravity of the tractor and the trailer, using force measurements received from a sensor set coupled to the hitch.

**BRIEF DESCRIPTION OF THE DRAWINGS**

The foregoing and other purposes, features, aspects and advantages will become apparent from the following detailed description of embodiments, given by way of illustration and not limitation, with reference to the accompanying drawings, in which the same reference refer to similar elements or to elements having similar functions, and in which:

Figure 1 is a schematic top view of a vehicle showing an electronic system installed in the vehicle, according to an embodiment;
Figure 2 is a block diagram of a part of the electronic system installed in the vehicle, according to an embodiment;
Figure 3 is a schematic side view of a four-wheel vehicle, showing the position of the center of gravity of the vehicle and forces exerted on the vehicle;
Figure 4 is a schematic front view of the four-wheel vehicle, showing the position of the center of gravity of the vehicle and forces exerted on the vehicle;
Figure 5 is a schematic side view of an articulated vehicle, showing an electronic system installed in the vehicle, according to another embodiment;
Figure 6 is a block diagram of a part of the electronic system installed in the vehicle of Figure 5, according to an embodiment;
Figure 7 is a block diagram showing electronic systems installed in a vehicle, according to an embodiment;
Figures 8A, 8B, 8C show variations as a function of time of accelerations measured in a wheel tire;
Figure 9 is a block diagram showing steps of a method for estimating the location of the center of gravity of a vehicle, according to an embodiment.

## DETAILED DESCRIPTION

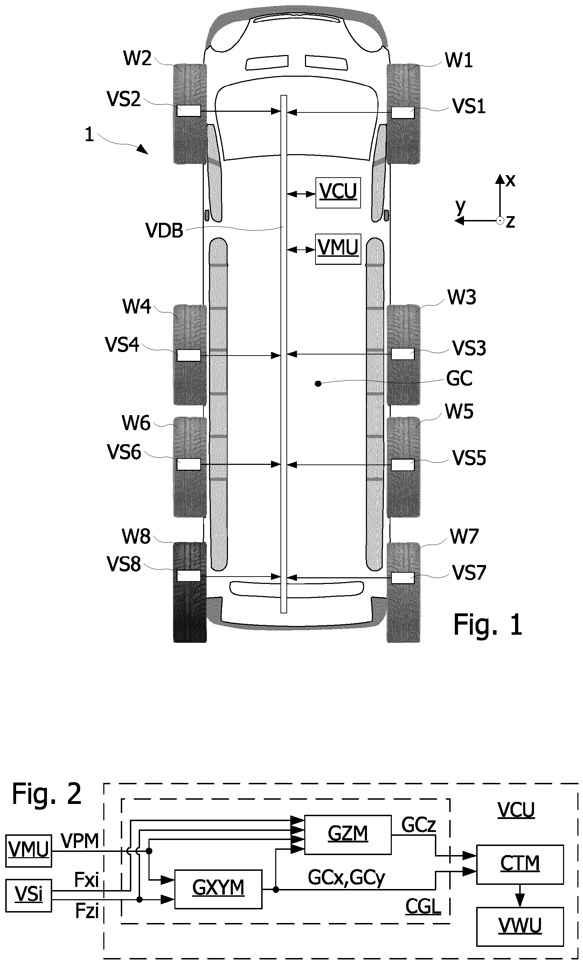

Figure 1 shows an unarticulated vehicle 1 comprising a plurality of wheel W1-W8 including at least two drive wheels. At least two wheels are associated with a respective set of wheel sensors VS1-VS8 connected to an address and data bus VDB. The vehicle 1 further comprises a vehicle control unit VCU and a measurement unit VMU connected to the bus VDB. The bus VDB can be of the type CAN (Controller Area Network).

Each sensor set VSi (VS1-VS8) is configured to determine forces Fzi supported by the wheel tire along respectively a longitudinal (or roll) axis x of the vehicle 1, along a lateral (or pitching) axis y of the vehicle and in a along an axis z perpendicular to a plane xy parallel to the ground of the vehicle.

The wheel sensors VS1-VS8 can be linked to the bus VDB directly or by means of a gateway which is connected to the bus. The link between the wheel sensors VS1-VS8 and the gateway can be wired or wireless.

Figure 2 represents a part of the vehicle control unit VCU, according to an embodiment. The vehicle control unit VCU comprises a gravity center unit CGL configured to estimate the position of the center of gravity GC of the vehicle 1. The gravity center unit CGL receives from each sensor set VSi the tire load Fzi and vehicle parameters VPM from the measurement unit VMU.

The gravity center unit CGL comprises a horizontal localization module GXYM and a vertical localization module GZM. The horizontal localization module GXYM computes coordinates GCx, GCy of the center of gravity GC of the vehicle 1 in a plane Oxy parallel to the ground of the vehicle from the tires loads Fzi provided by the sensor sets VSi. The vertical localization module GZM computes the height GCz of the center of gravity GC of the vehicle, e.g. from the ground of the vehicle.

The vehicle control unit VCU further comprises a gravity center control unit CTM and a warning unit VWU. The gravity center control unit CTM is configured to control the position (GCx, GCy, CGz) of the center of gravity GC of the vehicle, and to transmit a message to the warning unit VWU when this position is not within acceptable ranges. The warning unit VWU receives warning and failure messages from other units installed in the vehicle 1 and is configured to determine failures in the vehicle and warn the driver.

The vehicle parameters VPM can comprise dynamic parameters such as the mass of the vehicle, the acceleration and speed of the vehicle, and static parameters such as suspension properties, the number of axles, the type of each axle (driven, air suspension, steered), distances between axles, length of axles, chassis height, etc.

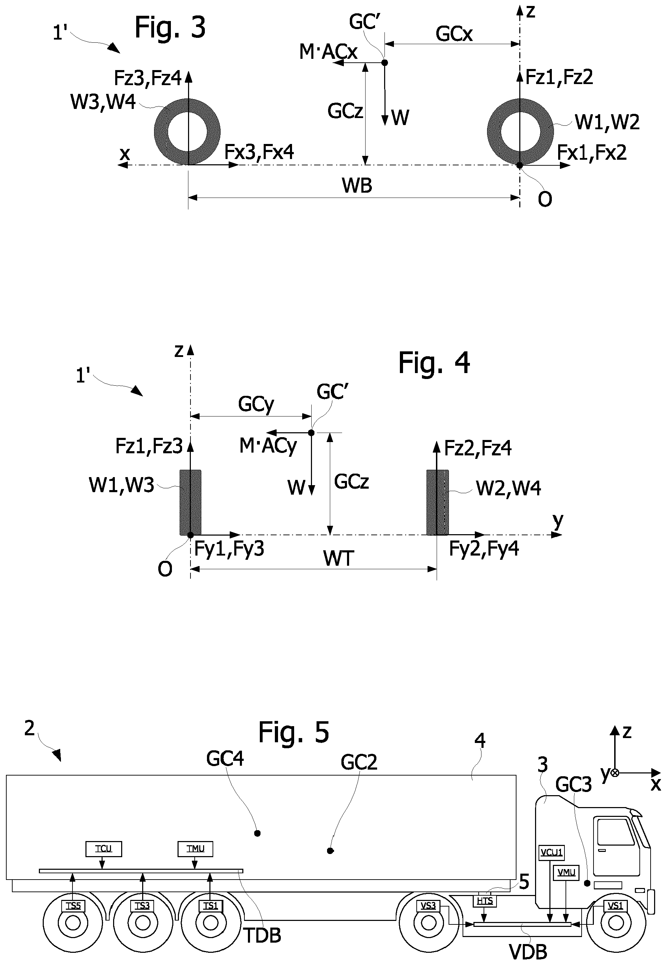

Figure 3 shows the side wheels W1, W3 of a four-wheel or two-axle vehicle 1' and the center of gravity GC' of the vehicle. Figure 4 shows the front wheels of the vehicle 1'. In Figures 3 and 4, the vehicle comprises a front axle supporting left and right front wheels W1, W2 and a rear axle supporting left and right rear wheels W3, W4. The tires act together as a supporting point for the complete vehicle mass, each wheel Wi being subjected to a force Fzi perpendicular to the ground plane Oxy of the vehicle. The origin point O of the plane Oxy can be chosen e.g., as the middle point of the surface of the front right wheel W1, in contact with the ground. In a steady state, each of the forces Fzi corresponds to the sprung weight of the vehicle exerted on the wheel Wi. Considering the equilibrium of the moments e.g., about the front axle (wheels W1 and W2) - or rear axle - and about an axis parallel to axis y and linking the right wheels W1, W3 of the vehicle, the following equations can be established:

$$GCx = (Fz3+Fz4)\cdot WB \, / \, (Fz1+Fz2+Fz3+Fz4) \qquad (1)$$

$$GCy = (Fz1+Fz3)\cdot WT \, / \, (Fz1+Fz2+Fz3+Fz4) \qquad (2)$$

where GCx, GCy are the coordinates of the center of gravity of the sprung mass of the vehicle in the plane Oxy from the origin point O, Fzi is the force measured by the sensor set VSi when the vehicle is in a steady state (not subjected to any acceleration), WB is the distance between the front and rear axles of the vehicle, and WT is the distance between the left and right wheels. The distances WB and WT can be provided by the measurement unit VMU. Then, if necessary, the coordinates in the plane Oxy of the center of gravity GC' of the vehicle 1 can be deduced from the coordinates GCx, GCy of the center of gravity of the sprung mass of the vehicle, using the mass and center of gravity of the wheel set W1-W4 of the vehicle 1', which are vehicle parameters that can be provided by the measurement unit VMU.

According to an embodiment, the height GCz of the center of gravity GC' of the sprung mass of the vehicle (from the plane Oxy, in the direction z perpendicular to the ground plane Oxy of the vehicle) is determined on the basis of a load transfer scheme, when the vehicle is subjected to a longitudinal acceleration, e.g. when the vehicle brakes or accelerates along a straight trajectory. Considering the equilibrium of the moments about the front (or rear) axle of the vehicle, the following equation can be established:

$$M \cdot g \cdot GCx + M \cdot ACx \cdot GCz = (Fz3 + Fz4) \cdot WB \qquad (3)$$

where M is the mass of the vehicle, g is the gravitational acceleration, ACx is the acceleration of the vehicle along the longitudinal axis x, and Fz1 and Fz2 are the forces along the axis z, measured by the sensor sets VS1 and VS2 when the vehicle is subjected to the acceleration ACx. The weight M·g and acceleration ACx of the vehicle can be provided by the vehicle measurement unit VMU which integrates an acceleration sensor.

The height (or coordinate along axis Oz) GCz of the center of gravity GC' can be deduced from equation (3) as follows:

$$GCz = ((Fz3 + Fz4) \cdot WB - M \cdot g \cdot GCx) / (M \cdot ACx) \qquad (4)$$

More precision can be obtained for the height of the center of gravity by also subjecting the vehicle to an acceleration along axis y and considering the equilibrium of the moments about the right (or left) wheels W1, W3 of the vehicle.

$$GCz = ((Fz2 + Fz4) \cdot WT - M \cdot g \cdot GCy) / (M \cdot ACy) \qquad (5)$$

Then, the height of the center of gravity GC' can be estimated for example by calculating a mean value of the values GGz obtained from equations (4) and (5)

According to an embodiment, the wheel sensor sets VSi provide accelerations along axes x and/or y. Thus, the acceleration value ACx in the equation (4) can replaced by the forces Fxi along the axis x, provided by the wheel sensor sets VSi, according to the following equation:

$$Fx1 + Fx2 + Fx3 + Fx4 = M \cdot ACx \qquad (6)$$

According to an embodiment, the vehicle measurement unit VMU provides the acceleration ACx of the vehicle and the wheel sensor sets provides the forces Fxi, the measured value of ACx or the computed value thereof according to equation (6) being used in equation (4) if one of these values is too noisy or incorrect due to a failure.

According to an embodiment, the module GZM computes the height GCz of the center of gravity GC, GC' of the module when the vehicle 1, 1' is subjected to a non-zero acceleration ACx and a zero acceleration ACy, or when the longitudinal forces Fxi are not null and preferably when the lateral forces Fyi are null. The computation of the height GCz can be performed periodically.

The equations (1) to (6) are derived from a simplified model assuming that the suspensions of the vehicle are rigid.

A more accurate model taking into account the suspension of the vehicle can be found in the thesis "Multi-axle Vehicle Modeling and Stability Control: A Reconfigurable Approach", Yubiao Zhang, 2019 (https://uwspace.uwaterloo.ca/bitstream/handle/10012/15069/Zhang_Yubiao.pdf). According to this model, the moment equilibrium is defined by the following equation:

$$f_z = K_s L_z^T (L_z K_s L_z^T + P_0)^{-1} S_0 \qquad (7)$$

where:

$f_z$, $K_s$, $L_z$, $P_0$, $S_0$ are matrices,

$$f_z = [f_{z1} \ f_{z2} \ \cdots \ f_{z2K}],$$

K is number of axles of the vehicle (or 2K is the number of wheels),
$K_s$ = diag $[k_{s1} \ k_{s2} \ ... \ k_{s2K}]$ is a diagonal matrix,

$$L_z = \begin{bmatrix} 1 & 1 & ... & 1 & 1 \\ WT/2 & -WT/2 & ... & WT/2 & -WT/2 \\ -L_1 & -L_2 & ... & -L_{2K-1} & -L_{2K} \end{bmatrix},$$

$$P_0 = \begin{bmatrix} 0 & 0 & 0 \\ 0 & -ms \cdot g \cdot (hs-hp) & 0 \\ 0 & 0 & -ms \cdot g \cdot (hs-hp) \end{bmatrix},$$

$$S_0 = [M \cdot g \quad -M \cdot ACy \cdot GCz \quad M \cdot ACx \cdot GCz]^T,$$

$M^T$ represents the transpose matrix of matrix M,
$k_{si}$ is the equivalent suspension stiffness at the wheel number i; generally, the values on a same axle are identical,
WT is the vehicle track for all the axles,
$L_i$ is the distance between the axle of the wheel number i and the position of the center of gravity GC, as projected on the ground plane Oxy of the vehicle ($L_i$ depends on GCx and the distances separating the axles of the vehicle),
ACx and ACy are the longitudinal and lateral accelerations of the vehicle 1, which can be measured by accelerometers in the vehicle,
ms is the sprung mass of the vehicle,
hs is the distance between the center of gravity of the sprung mass ms and the roll or pitch axis of the vehicle,
hp is the height of the roll or pitch axis.

The mass M of the vehicle is the sum of the sprung mass ms and the mass of the wheel set of the vehicle. The sprung mass ms can be computed as follows:

$$ms \cdot g = \sum_i \ Fzi \tag{8}$$

In equation (7), the quantities $M \cdot ACx$ and $M \cdot ACy$ can be replaced respectively by the sums of the forces Fxi and Fyi measured by the sensor sets VSi. In addition, matrix $S_0$ can be simplified by subjecting the vehicle to only a longitudinal acceleration ACx (ACy = 0). However less precision is obtained for the height GCz. All the other required data to compute the height GCz of the center of gravity GC of the vehicle are provided by the sensor sets VSi in the wheels and the measurement unit VMU.

According to another embodiment, the vehicle is an articulated vehicle towing a trailer. Figure 5 shows such an articulated vehicle 2 comprising a tractor 3 and a trailer 4 fixed to the tractor by a hitch 5. The tractor 3 can be equipped as the vehicle 1 with a vehicle control unit VCU1, a measurement unit VMU and wheel sensors VS1-VS8 in at least two wheels, the units VCU1, VMU and the wheel sensors VSi being connected to an address and data bus VDB. The trailer 4 can also be equipped as the vehicle 1, with a control unit TCU, a measurement unit TMU and wheel sensors TS1-TS4 in the wheels of the trailer 4, the units TCU, TMU, and the wheel sensors being connected to an address and data bus TDB. In addition, the vehicle 2 is equipped with a sensor set HTS for measuring forces exerted by the trailer 4 on the hitch 5, the sensor set HTS being connected to the bus TDB.

Each sensor set VSi, TSi, HTS of the vehicle 2 is configured to determine forces Fxi, Fyi, Fzi supported by the corresponding wheel tire and hitch 5 along a longitudinal (or roll) axis x, along a lateral (or pitching) axis y of the tractor 3 or trailer 4, and in a direction z perpendicular to a plane xy parallel to the ground of the vehicle.

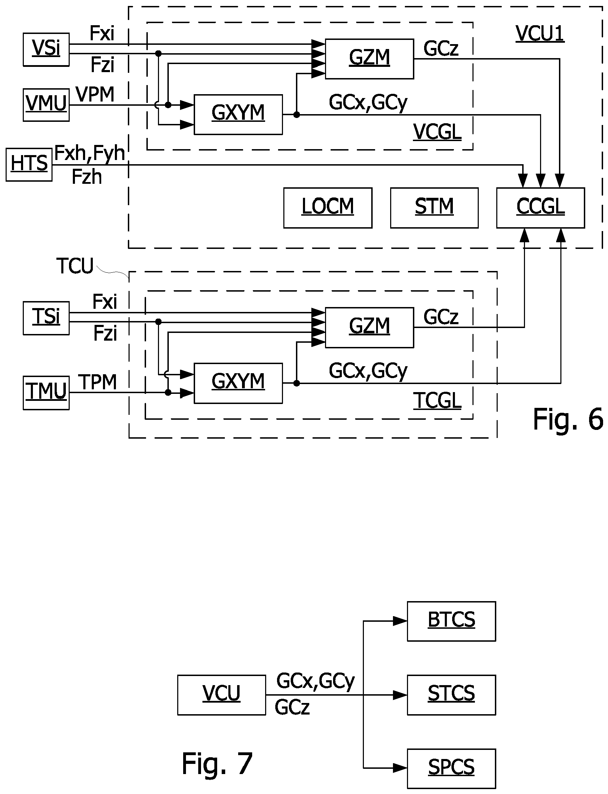

Figure 6 represents a part of the vehicle control unit VCU1 and the trailer control unit TCU, according to an embodiment. The control unit VCU1 differs from the control unit VCU of Figure 2 in that it comprises a common gravity center unit CGCL for estimating the position of the center of gravity GC2 of the whole vehicle 2, a gravity center unit VCGL for estimating the position of the center of gravity GC3 of the tractor 3, a localization unit LOCM and a state estimating unit STM for estimating the state of the vehicle 2. The trailer control unit TCU comprises a gravity center unit TCGL for estimating the position of the center of gravity GC4 of the trailer 4. The gravity center units VCGL, TGCL of the tractor 3 and the trailer 4 can be identical to the gravity center unit CGL of figure 2.

According to an embodiment, the trailer control unit TCU is a part of the vehicle control unit VCU installed in the tractor 3.

The common gravity center unit CCGL receives the positions (GCx, GCy, GCz) of the center of gravity of both the tractor 3 and the trailer 4, and the forces Fxh, Fyh, Fzh exerted on the hitch 5, as measured by the sensor set HTS. The common gravity center unit CCGL is configured to estimate the position of the center of gravity GC2 of the whole articulated vehicle 2, taking into account the forces Fxh, Fyh, Fzh exerted on the hitch 5, from the respective positions of the centers of gravity GC3, GC4 of the tractor 3 and the trailer 4.

The state estimating unit STM is configured to estimate parameters such as a yaw rate and slip angles of the vehicle 2, and other vehicle dynamic states that cannot directly be measured. To this purpose, the unit STM can receive the positions (GCx, GCy, GCz) of the centers of gravity GC3, GC4, GC2 of the tractor 3, the trailer 4 and the vehicle 2 and other measurements acquired by the sensors of the vehicle 2. These parameters can also be estimated separately for the tractor 3 and the trailer 4.

The localization unit LOCM is configured to estimate geographical position and velocity of the vehicle 2 without using a localization module for receiving signals from a global navigation satellite system. Further the localization unit LOCM can be configured to compute more accurate position and velocity of the vehicle 2 or separately of the tractor 3 and the trailer 4, using parameters from other units, such as accelerations and forces Fxi, Fxh, Fyi, Fyh. More particularly, the localization unit LOCM in the vehicle 1, 1', 2 can be configured to proactively determine a safe turning radius from the positions (GCx, GCy, GCz) of the center of gravity GC1, GC1', GC2, GC3, GC4, of the vehicle 1, 1', 2 and/or of the tractor 3 and the trailer 4. In fact, localization is highly needed in autonomous vehicles and satellite navigation data do not provide enough precision and may temporally be not received.

The positions (GCx, GCy, GCz) of the centers of gravity GC3, GC4, GC2, GC1, GC1' of the tractor 3, the trailer 4 and the vehicle 2, 1, 1' can also be provided by the vehicle control unit VCU, VCU1 of the vehicle to other vehicle systems such as a brake and engine torque controller BTCS, a stability control system STCS and a suspension control system SPCS, via the bus VDB, TDB, for optimizing their control startegy to improve performance and safety.

The brake and engine torque control system BTCS of the vehicle 1, 1', 2 can be configured to operate the brakes and the engine torque of the vehicle taking into account load information on each tire and the estimated position of the center of gravity GC1, GC1', GC2, GC3, GC4 of the vehicle 1, 1', 2, 3, 4 to estimate a dynamic load on each tire during turning and braking and then to operate each of the brakes and the engine of the vehicle such that the corresponding tire keep its adherence to the ground or keeps a desired slip ratio.

The stability control system STCS of the vehicle 1, 1', 2 can be configured to estimate a reference band and a limit at which the vehicle should operate for maximum cornering ability without rolling or yawing, using the estimated position of the center of gravity GC, GC', GC2.

The suspension control system SPCS of the vehicle 1, 1', 2 can be configured to drive an active suspension such as suspension air bags to maintain a ride height or load on each wheel during cornering, braking and accelerating, using the estimated position of the center of gravity GC, GC', GC2.

The brake and engine torque control system BTCS and/or stability control system STCS and/or suspension control system SPCS can operate in a closed looped feedback to provide better traction and/or least rolling resistance and/or least brake and tire wear.

Each wheel sensor set VSi, TSi in a wheel W1-W8 can be configured to:

- collect wheel parameters of the wheel tire with which it is associated; and
- estimate the force Fzi supported by the wheel tire from the wheel parameters collected on the wheel tire, and preferably also the forces Fxi and Fyi.

The wheel parameters may comprise one or more of the following parameters:

- acceleration parameters including an acceleration curve measured by an acceleration sensor fixed at an inner face of the wheel tire, during one wheel revolution,
- a strain parameter including a strain measured by a strain sensor at the inner face of the wheel tire, during one wheel revolution,
- a tire pressure measured by a pressure sensor,
- vehicle velocity,
- road surface parameters provided by road sensors and comprising information such as the quality of the road (presence of snow, ice or water), and road inclination angle,

According an embodiment, each wheel sensor set VSi, TSi comprises computing means, e.g. based on a neural network, to predict the forces Fxi, Fyi, Fzi supported by the wheel tire, based on load transfers during movements of the vehicle. The neural network can be based on any algorithm such as Fletcher-Powel Conjugate Gradient, Polak-Ribiere Conjugate Gradient, and One Step Secant of Variable Learning Rate Backpropagation, for example.

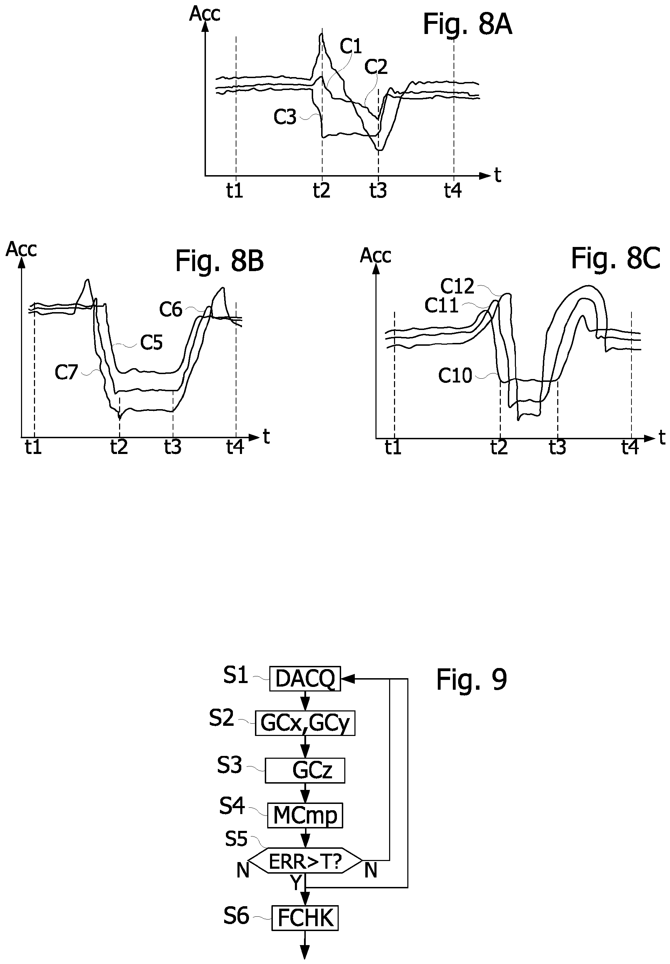

In the following, each of the sensor sets VSi, TSi includes accelerometers according to x, y and z axes. Figures 8A, 8B and 8C show curves C1-C3, C5-C8 and C10-C12 of variations of accelerations Ac measured by such accelerometers in a tire as a function of time, during one tire revolution (between times t1 and t4). The curves C1, C2 and C3 of Figure 8A show acceleration variations along axes x, y and z, respectively. The curves C5, C6, C7 of figure 8B show the variations of the acceleration along axis z when the load on the wheel increases from curve C5 to curve C7. The curves C10, C11, C12 of Figure 8C show the variations of the acceleration along axis z when the rotation speed of the wheel increases from curve C10 to curve C12. At times t2 and t3, the accelerometer on the inner face of the tire is located repectively at the leading and traling edges of the contact patch of the tire to the ground. Curves C5 to C7 show that when the load increases, the leading edge (time t2) and the trailing edge (time t3) of the tire move away from each other, and the amplitude of the acceleration variations increases. Therefore, the load on the wheel tire can be deduced from the acceleration measured in the tire. Curves C10 to C12 show that when the rotation speed of the tire increases, the leading edge (time t2) and the trailing edge (time t3) of the tire tends to come closer to each other and the amplitude of the acceleration variations increases. Therefore, the rotation speed of the wheel tire can be deduced from the acceleration measured in the tire.

It should be observed that if another sensor type is used to measure a velocity or a position inside the wheel tire, similar waveforms would be generated since acceleration, velocity and position are related to each other by derivativon or integration. For example, using an optical sensor to measure a distance or position would provide a displacement and a second order derivative of such a displacement would provide an acceleration.

According to an embodiment, a data driven Machine Learning-based approach is used. In such an approach, a machine learning can be developed using measurements of tire pressure, tire load, and road surface conditions. A truth labelling would be done for a normal load. The above measurements appear to be the most sensitive parameters for the waveform in Figure 8A or the most significant parameters for the acceleration / displacement of the tire. A deep neural network model can be developped for estimating the load through vast amount of training data at different operating conditions, e.g.: with three different loads, velocities, tire pressures, and road surface conditions. More than three of these parameter would improve the accuracy, but three is minimum requirement for an accurate polynomial to be determined by the neural network. More details can be found in the patents n°US 8 844 346 and US 9 358 846.

According to another embodiment, a physics-based approach, using parameters such as road conditions, inclination angle of the road and suspension movements can be quantified. Using these data, an inverse tire model can be generated by applying a complete physics-based approach, to determine the load under the tire for a given value of acceleration and/or velocity and/or displacement.

A combination of the data driven machine learning approach and the physics-based approach could also be developed. Assuming that a very accurate inverse tire model can be developed, such an inverse tire model could be used in the machine learning training function. A reinforcement learning model for the neural network can also be used to train the algorithm on the fly together with the physics based approach in the error function for training the algorithm. If there is not an accurate inverse tire model, then the machine learning model can have tunable parameters, like tunable Pacejka parameters, that could be adjusted as the model is trained with the machine learning error function.

The road conditions and inclination angle of the road can be taken into account by the vehicle control unit VCU to refine the force measurements Fxi, Fyi and Fzi provided by the wheel sensor sets VSi, TSi, in order to generate more accurate values for the position of the center of gravity of the vehicle 1, 2.

Figure 9 illustrates steps S1 to S6 of a method implemented by the control unit VCU for estimating the location of the center of gravity of a vehicle. In step S1, parameters VPM and measurements Fxi, Fzi for estimating the center of gravity of a vehicle are acquired and received by the control unit VCU, VCU1 of the vehicle 1, 2. The parameters and measurements are those used in the previous equations (1), (2) and (7).

In step S2, the control unit VCU computes the coordinates GCx and GCy of the center of gravity CG of the vehicle 1 or tractor 3, in the plane Oxy, using equations (1) and (2) or derived equations applicable to vehicle having more than two axles, parameters VPM and measurements Fxi, Fzi, acquired at step S1.

In step S3, the control unit VCU, VCU1 computes the coordinate GCz of the vehicle 1 or tractor 3 in the spatial coordinate system Oxyz, using equation (4) applicable to two-axle vehicles or (6) applicable to vehicles of more than two axles, parameters VPM and measurements Fxi, Fzi, acquired at step S1. Steps S1 to S3 can be performed periodically, step S3 being performed when the vehicle is subjected to a longitudinal acceleration or braking for step S3.

In step S4, the control unit VCU can control the position (GCx, GCy, GCz) of the center of gravity CG of the vehicle 1, 3, by comparing it with acceptable ranges defined by a three-dimension vehicle model.

In step S5, if the position of the center of gravity of the vehicle is outside the acceptable ranges, step S6 is performed to send a warning message to the module VWU. The module VWU processes the warning message and determines if the driver of the vehicle must be warned about an incorrect loading of the vehicle or a vehicle malfunction, as a function of the position of the center of gravity CG and possibly other parameters related to the vehicle.

In case of an articulated vehicle 2, steps S1 to S3 are performed by the trailer control unit TCU which transmits the position the center of gravity of the trailer 4 to the control unit VCU1 of the tractor 3. Steps S1 to S3 are also performed for the tractor 3 by the control unit VCU1. Then the positions the centers of gravity of the tractor 3 and the trailer 4 are processed to determine the center of gravity of the whole articulated vehicle 2.

The above description of various embodiments is provided for purpose of description to one of ordinary skills in the related art. It is not intended to be exhaustive or to limit the scope of the present disclosure solely to the disclosed embodiments. Numerous alternatives or variations to the present disclosure will be apparent to those of ordinary skills in the related art. Accordingly, while some alternatives or embodiments have been presented specifically, other embodiments will be apparent or easily developed by those of ordinary skills in the related art. Limitations in the appended claims should be interpreted broadly based on the language used in the claims and such limitations should not be restricted to the specific examples described above.

In this respect, it is apparent to those of ordinary skills in the related art that other equations can be used, involving the position of the center of gravity, on the basis of alternatives of moment equilibrium for estimating the position of a center of gravity of a vehicle. For example, the coordinates GCx, GCy of the center of gravity CG of the vehicle can be determined from a 2F force equilibrium equation. The coordinate GCz of the center of gravity CG of the vehicle can be determined by measuring forces $F_{xi}$ and $F_{zi}$ in the wheels $W_i$ of the vehicle subjected to an acceleration ACx and/or ACy. In the case of only the acceleration ACx is not null, the coordinate GCz can be derived from the following equation:

$$\sum_i F_{xi} = \sum_i F_{zi} \cdot ACx \qquad\qquad (8)$$

where $F_{xi}$ and $F_{zi}$ are measured when the vehicle is subjected to the acceleration ACx.

In addition, the height of the center of gravity of the vehicle can be determined using other types of movements of the vehicle, provided that such movement involves a load transfer. In this respect, this movement can be for example a lateral acceleration or a combination of a longitudinal and lateral accelerations.

Further, it is preferable to have a sensor set VSi, TSi in each wheel of the vehicle. However, if less accuracy is acceptable regarding the position of the center of gravity of the vehicle 1, 1', 2, 3, 4, a sensor set VSi, TSi can be provided only in wheels of axles which do not have conventional axle load sources and the boundary axles (first and last axles), e.g. only in the wheels at the four corners of the vehicle and in one of the wheels of an intermediary axle of the vehicle. Then, an estimation of the load on an intermediary axle can be performed using the loads measured by the sensor sets.

If still less accuracy is acceptable, the vehicle can be equipped with a sensor set in only the four corner wheels or only one wheel per axle, preferably on alternate sides of the vehicle. Then the loads on the wheels including no sensor set can be estimated from the loads measured by the sensor sets. At least, a sensor set is provided only in one wheel of each of the boundary axles on alternate sides of the vehicle.

**Claims**

**1.** A method for controlling performance of a vehicle (1, 1', 2, 3, 4), the method comprising:

    collecting wheel loads measures ($F_{zi}$) applied to wheels tires (Wi) of the vehicle, from wheel sensor sets (VSi, TSi) installed in the wheels of the vehicle, when the vehicle is in a steady state and when the vehicle is subjected to a movement (ACx);
    computing, by a vehicle control unit (VCU), longitudinal and lateral positions (GCx, GCy) of a center of gravity (GC) of the vehicle, based on vehicle parameters (VPM) and the wheel loads measures ($F_{zi}$) when the vehicle in the steady state;
    collecting movement measures of the movement from the wheel sensor sets;
    computing, by the vehicle control unit (VCU), a height (GCz) of the center of gravity of the vehicle, based on the movement measures, the vehicle parameters, the longitudinal and/or lateral positions of the center of gravity and the wheel load measures ($F_{zi}$) when the vehicle is subjected to the movement; and
    using the lateral positions and height of the center of gravity of the vehicle to adjust control of at least one of vehicle brakes, vehicle engine torque, vehicle stability and vehicle suspension.

2. The method of claim 1, wherein computations of the position of the center of gravity (GC) of the vehicle (1, 1', 3, 4) are performed using equations established considering an equilibrium of moments about a front or rear axle of the vehicle and about an axis along right or left wheels (W1-W3, W2-W4) of the vehicle.

3. The method according to claim 1 or 2, wherein the movement is one of the following:

   a longitudinal acceleration (ACx),
   a lateral acceleration, and
   a combination of a longitudinal and lateral acceleration.

4. The method according to one of claims 1 to 3, wherein:

   the vehicle is a four-wheel vehicle (1'), and
   the longitudinal position (GCx) of the center of gravity (GC) of the vehicle is computed from a sum of the wheel load measures (Fzi) on front or rear wheels (Wi), multiplied by a distance (WB) between the front and rear axles of the vehicle and divided by a sum of the wheel load measures (Fzi) on all the wheels of the vehicle, or the lateral position (GCy) of the center of gravity (GC) of the vehicle is computed from a sum of the wheel load measures (Fzi) on left or right wheels (Wi), multiplied by a distance (WT) between right and left wheels on a same axle of the vehicle, and divided by a sum of the wheel load measures (Fzi) on all the wheels of the vehicle.

5. The Method according to one of claims 1 to 4, wherein the vehicle (1') is a four-wheel vehicle, and the movement is a longitudinal acceleration (ACx), the height (GCz) of the center of gravity (GC) of the vehicle being computed from a difference between a sum of the wheel load measures (Fzi) on front or rear wheels (Wi), multiplied by a distance (WB) between the front and rear axles of the vehicle, and a weight of the vehicle multiplied by the lateral position (GCx) of the center of gravity of the vehicle, the difference being divided by a mass (M) of the vehicle multiplied by the longitudinal acceleration.

6. The method according to one of claims 1 to 5, wherein the vehicle is an articulated vehicle (2) comprising a trailer (4) linked to a tractor (3) by means of a hitch (5), the method further comprising:

   collecting wheel loads measures (Fzi) applied to wheel tires (Wi) of the trailer, by means of wheel sensors (TSi) installed in the wheels of the trailer, when the vehicle is in a steady state and when the vehicle is subjected to a movement (ACx);
   computing, by a control unit (VCU, TCU), longitudinal and lateral positions (GCx, GCy) of a center of gravity (GC) of the trailer, based on trailer parameters (TPM) and the wheel loads measures (Fzi) when the vehicle in the steady state;
   collecting movement measures of the movement; and
   computing, by the control unit (VCU), a height (GCz) of the center of gravity of the trailer, based on the movement measures, the trailer parameters, longitudinal positions of the center of gravity of the trailer and the wheel loads measures (Fzi) of the trailer when the vehicle is subjected to the movement.

7. The method according to claim 6, further comprising:

   collecting hitch forces (Fxh, Fyh, Fzh) applied to the hitch (5), by means of a hitch sensor set (HTS) coupled to the hitch; and
   estimating a position of the center of gravity of the articulated vehicle (2), from respective positions of the centers of gravity (GC) of the tractor (3) and the trailer (4), taking into account the hitch forces.

8. The method according to one of claims 1 to 7, further comprising:

   collecting, by each wheel sensor set (VSi, TSi) installed in the wheels of the vehicle (1, 2), wheel parameters of the wheel tire with which the wheel sensor set is associated; and
   estimating by each wheel sensor set, the longitudinal, lateral and vertical forces (Fxi, Fyi, Fzi) exerted on the wheel tire from the wheel parameters collected on the wheel tire, based on load transfers during movements of the vehicle (1, 1', 2).

9. The method according to claim 8, wherein estimating the longitudinal, lateral and vertical forces (Fxi, Fyi, Fzi) by one of the wheel sensor sets (VSi, TSi), is performed by a neural network from the wheel parameters, the method further comprising training the neural network using training data generated with different loads, velocities, tire pressures, and road surface conditions.

10. The method according to claim 8 or 9, wherein the wheel parameters comprise at least one of:

   - acceleration parameters measured by an acceleration sensor fixed at an inner face of the wheel tire,
   - a strain parameter measured by a strain sensor at the inner face of the wheel tire,
   - a tire pressure measured by a pressure sensor,
   - vehicle velocity, and
   - road surface parameters and road inclination angle provided by road sensors.

11. The method according to one of claims 8 to 10, further comprising refining the longitudinal, lateral and vertical forces (Fxi, Fyi, Fzi) provided by the wheel sensor sets (VSi, TSi), using road surface parameters and road inclination angle.

12. Method according to one of claims 1 to 11, further comprising:

   comparing the position (GCx, GCy, GCz) of the center or gravity (CG) of the vehicle (1, 1', 2) to a three-dimension vehicle model; and
   transmitting a warning message if the position of the center or gravity is not within the three-dimension vehicle model.

13. A system for controlling performance a vehicle (1, 1', 2, 3, 4), the system comprising a computing unit (VCU, VCU1, TCU) connected to wheel sensor sets (VSi, TSi) installed in wheels (Wi) of the vehicle, the computing unit being configured to implement the method of one of claims 1 to 12.

14. A vehicle (1, 1', 2, 3, 4) comprising a computing unit (VCU, VCU1, TCU) connected to wheel sensor sets (VSi, TSi) installed in wheels (Wi) of the vehicle, the computing unit being configured to implement the method of one of claims 1 to 12.

15. The vehicle of claim 14, comprising a tractor (3) and a trailer (4) coupled to the tractor by a hitch (5), the computing (VCU1) unit being configured to compute positions of centers of gravity of the tractor and the trailer, and to estimate the position of the center of gravity of vehicle from the positions of the centers of gravity of the tractor and the trailer, using force measurements received from a sensor set coupled to the hitch.

W2   VS2   1   VDB

W1   VS1

VCU

VMU

x
y   z

W4   VS4

W3   VS3
GC

W6   VS6

W5   VS5

W8   VS8

W7   VS7

Fig. 1

Fig. 2

VMU   VPM

VSi   Fxi
Fzi

GZM   GCz

GXYM   GCx,GCy

CGL

VCU

CTM

VWU

Fig. 3

1'

Fz3,Fz4
W3,W4

x          Fx3,Fx4

GC'
M·ACx
GCz
W

GCx
z
Fz1,Fz2
W1,W2
Fx1,Fx2
O

WB

Fig. 4

z
1'

GCy          GC'
M·ACy
Fz1,Fz3
W1,W3
W          GCz

Fz2,Fz4
W2,W4

y
Fy1,Fy3          Fy2,Fy4
O          WT

Fig. 5

2          GC4          GC2          4          z
3          GC3          y⊗          x

TCU          TMU
VCU1
VMU

TS5          TS3          TS1          5
VS3          HTS          VS1
TDB          VDB

Fig. 6

Fig. 7

Fig. 8A

Acc

C1

C2

C3

t1    t2    t3    t4    t

Fig. 8B

Acc

C6

C5

C7

t1    t2    t3    t4    t

Fig. 8C

Acc

C12

C11

C10

t1    t2    t3    t4    t

Fig. 9

S1 — DACQ

S2 — GCx,GCy

S3 — GCz

S4 — MCmp

S5 — ERR>T?    N

N    Y

S6 — FCHK

Europäisches
Patentamt

European
Patent Office

Office européen
des brevets

# EUROPEAN SEARCH REPORT

Application Number

**EP 22 16 4568**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2013 217109 A1 (BOSCH GMBH ROBERT [DE]) 5 March 2015 (2015-03-05) * abstract * * claims 1, 10 * * paragraphs [0002], [0005], [0020], [0031] * | 1-15 | INV. B60G17/0195 B60W40/00 |
| A | Deleer Barazanji: "Model Based Estimation of Height of Center of Gravity in Heavy Vehicles", , 21 March 2012 (2012-03-21), XP055278101, Retrieved from the Internet: URL:http://www.diva-portal.se/smash/get/diva2:513813/FULLTEXT02.pdf [retrieved on 2016-06-06] * pages 17, 19 * | 6,7 | |
| A | US 6 526 334 B1 (LATARNIK MICHAEL [DE] ET AL) 25 February 2003 (2003-02-25) * column 2, lines 30-57 * | 1-14 | |

TECHNICAL FIELDS
SEARCHED (IPC)

B60G
B60W

The present search report has been drawn up for all claims

| Place of search | Date of completion of the search | Examiner |
|---|---|---|
| The Hague | 29 July 2022 | Schmidt, Nico |

EPO FORM 1503 03.82 (P04C01)

## ANNEX TO THE EUROPEAN SEARCH REPORT
## ON EUROPEAN PATENT APPLICATION NO.

EP 22 16 4568

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2022

| Patent document cited in search report | Publication date | Patent family member(s) | | Publication date |
|---|---|---|---|---|
| DE 102013217109 A1 | 05-03-2015 | NONE | | |
| US 6526334 B1 | 25-02-2003 | AU | 3338697 A | 07-01-1998 |
| | | DE | 19623595 A1 | 18-12-1997 |
| | | EP | 0904210 A1 | 31-03-1999 |
| | | JP | 2000516703 A | 12-12-2000 |
| | | JP | 2008074392 A | 03-04-2008 |
| | | US | 6526334 B1 | 25-02-2003 |
| | | WO | 9747485 A1 | 18-12-1997 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8844346 B

- US 9358846 B

**Non-patent literature cited in the description**

- **YUBIAO ZHANG.** Multi-axle Vehicle Modeling and Stability Control: A Reconfigurable Approach. *thesis,* 2019, https://uwspace.uwaterloo.ca/bitstream/handle/10012/15069/Zhang_Yubiao.pdf